# EUROPÄISCHE PATENTANMELDUNG

(11) **EP 2 133 155 A1**
(43) Veröffentlichungstag der Anmeldung: **16.12.2009**
(21) Anmeldenummer: 09007421.2
(22) Anmeldetag: 04.06.2009
(51) Int. Cl.: B05C 17/02

(54) **Farbwalze für einen Farbroller, Farbroller mit einer solchen Farbwalze sowie Verfahren zur Herstellung einer Schaumstoffwalze für eine solche Farbwalze**

(30) Priorität: 10.06.2008 DE 102008027537
(71) Anmelder: Friess Nespoli GmbH, 91550 Dinkelsbühl (DE)
(72) Erfinder: Nespoli, Alessandro, cap 23896 Sirtori (IT)
(74) Vertreter: Blaumeier, Jörg

(57) **Zusammenfassung**

Farbwalze für einen Farbroller, umfassend eine Schaumstoffwalze mit zylindrischer Außenfläche, **dadurch gekennzeichnet, dass** die aus einem Schaumstoffblock (1) herausgeschnittene Schaumstoffwalze (12) an der Außenfläche (8) unter Materialabtrag zur Vergrößerung der Oberfläche derart durch Abfräsen nachbearbeitet ist, dass eine raue, aufgerissene zylindrische Walzenoberfläche mit geöffneten außenliegenden Schaumstoffzellen erzeugt ist.

## Beschreibung

Die Erfindung betrifft eine Farbwalze für einen Farbroller, umfassend eine Schaumstoffwalze mit zylindrischer Außenfläche.

Farbwalzen der in Rede stehenden Art werden bei Farbrollern, die dem Lackieren dienen, eingesetzt. Die Farbwalze besteht aus einer Schaumstoffwalze, also einem zylindrischen Schaumstoffkörper, in dessen Mitte ein üblicherweise aus Kunststoff gefertigtes Halteelement eingesetzt und darin verklebt ist, in welches Halteelement ein Halteabschnitt eines Bügels, der Teil des Farbrollers ist, eingesteckt und dort lösbar verrastet wird. Solche Farbwalzen sind bekanntlich austauschbar, können also von dem Bügel wieder abgezogen und gegen eine neue ersetzt werden.

Die Schaumstoffwalze wird üblicherweise aus einem Schaumstoffblock mittels eines zylindrischen Messers herausgeschnitten. Dieses zylindrische Messer weist üblicherweise zwei konzentrisch zueinander angeordnete Messerabschnitte auf. Während der radial gesehen äußere Messerabschnitt die Außenkontur bestimmt, wird über den inneren Messerabschnitt eine mittig an der Schaumstoffwalze ausgebildete Eintiefung ausgeschnitten, in die der besagte Haltekörper eingesetzt und verklebt wird.

Zum Herausschneiden aus dem Schaumstoffblock wird das über ein geeignetes Werkzeug rotierende angetriebene Messer von oben kommend aufgesetzt und in den weichen Schaumstoffblock eingedrückt. Die herausgeschnittenen Schaumstoffwalzen weisen eine glatte, jedoch relativ geschlossene Oberfläche aus. Die Oberflächenstruktur wird durch die Zellstruktur des Schaummaterials bestimmt, wobei lediglich die durch das Schneiden geöffneten Zellen der Schaumstruktur oberflächliche Öffnungen in der Außenseite bilden. Aufgrund der relativ geschlossenen Außenfläche nimmt die Schaumstoffwalze beim Eintauchen in die Farbe relativ wenig Farbe auf, was zwangsläufig dazu führt, dass nur relativ wenig Fläche in einem Streichgang mit Farbe belegt werden kann. D.h., dass die Flächenproduktivität bei einmaligem Eintauchen gering ist. Auch ist die Farbverteilung nicht optimal, wie auch keine oder nur eine geringe Zerstörung von Luftblasen in der lackierten Oberfläche erfolgt.

Der Erfindung liegt damit das Problem zugrunde, eine Farbwalze anzugeben, die eine verbesserte Oberfläche aufweist.

Zur Lösung dieses Problems ist eine Farbwalze der eingangs genannten Art vorgesehen, die sich dadurch auszeichnet, dass die aus einem Schaumstoffblock herausgeschnittene Schaumstoffwalze an der Außenfläche unter Materialabtrag zur Vergrößerung der Oberfläche derart durch Abfräsen nachbearbeitet ist, dass eine raue, aufgerissene zylindrische Walzenoberfläche mit geöffneten außenliegenden Schaumstoffzellen erzeugt ist.

Erfindungsgemäß erfolgt nun, nachdem die Erfinder die den Nachteilen zugrundeliegende Ursache erkannt haben, ein Nachbearbeitungsschritt der herausgeschnittenen Schaumstoffwalze, im Rahmen dessen an der zylindrischen Walzenaußenfläche, die die Lackauftragsfläche bildet, Material abgetragen wird. Das heißt, die sich beim Lackieren als nachteilig erweisende weitgehend geschlossene und nur wenige offene Zellen aufweisende Oberflächenstruktur wird abgetragen, so dass sich nach dem Materialabtrag eine quasi aufgerissene, also eine Vielzahl offener Zellen aufweisende Oberfläche ergibt. Das Farbaufnahmevermögen ist aufgrund der deutlich vergrößerten Oberfläche bzw. dem offenen Zellvolumen wesentlich besser, in einem Streich- oder Lackerigang kann eine wesentlich größere Fläche bearbeitet werden. Das erhältliche Lackierbild ist wesentlich besser, es ist vollständig homogen und gleichförmig, wobei Luftblasen durch die offene, aufgeraute oder aufgerissene Oberfläche eliminiert werden, was zu einem sehr feinen und homogenen Streichbild führt.

Der Oberflächenabtrag erfolgt zweckmäßigerweise durch Abfräsen der Außenfläche unter Verwendung eines geeigneten Fräswerkzeugs, worauf nachfolgend noch eingegangen wird. Unter "Abfräsen" wird hierbei jedweder Materialabtrag verstanden, der zu einem über die Länge der Schaumstoffwalze gleichmäßigen Materialabtrag und einem homogenen, aufgerissenen Oberflächenbild der Walze führt.

Neben der Farbwalze selbst betrifft die Erfindung ferner einen Farbroller umfassend eine solche Farbwalze, wobei der Farbroller in bekannter Weise einen Bügel mit einem geeigneten Haltegriff sowie die lösbar am Bügel befestigte Farbwalze umfasst.

Weiterhin betrifft die Erfindung ferner ein Verfahren zur Herstellung einer Schaumstoffwalze für eine Farbwalze der beschriebenen Art. Das Verfahren zeichnet sich dadurch aus, dass ein die Schaumstoffwalze bildender zylindrischer Körper aus einem Schaumstoffblock herausgeschnitten und anschließend an seiner Außenfläche unter Materialabtrag zur Bildung einer rauen, aufgerissenen zylindrischen Oberfläche mit geöffneten außenliegenden Schaumstoffzellen durch Abfräsen nachbearbeitet wird.

Im Rahmen der Nachbearbeitung wird erfindungsgemäß die Außenfläche abgefräst, was entweder unter Verwendung einer rotierenden Walze erfolgen kann, an deren Außenseite mehrere Fräsabschnitte, die Material abtragend an der feststehenden oder ebenfalls rotierenden Schaumstoffwalze angreifen, erfolgen kann. Die Fräsabschnitte können in Form einer Vielzahl einzelner, über die gesamte Walzenaußenfläche verteilt und versetzt zueinander angeordneter Fräsvorsprünge ausgebildet sein. Alternativ ist auch denkbar, die Fräsabschnitte in Form mehrerer sich über die Länge der Walze erstreckender Fräsvorsprünge auszubilden. Das heißt, dass die Art der verwendeten Fräsabschnitte letztlich beliebig ist, so lange sichergestellt ist, dass sich ein einheitliches Fräsbild an dem Schaumstoffkörper erzielen lässt.

Alternativ zur Verwendung einer rotierenden Walze ist es auch denkbar, zum Abfräsen einen Einzelfräser zu verwenden, der längs des zylindrischen Körpers bewegt wird, wobei entweder der Einzelfräser oder der Körper oder beide rotieren. Der Einzelfräser ist in einem geeigneten Werkzeughalter aufgenommen, über den er entlang des zylindrischen Körpers, der entsprechend eingespannt ist, bewegt werden kann, dabei über seine Fräskante den Schaumstoff abfräsend. Es kann sich dabei um einen feststehenden Einzelfräser handeln oder einen nach Art eines Wirbelfräsers rotierenden Einzelfräser, wobei in diesem Fall der Körper selbst nicht rotieren muss, bei einem feststehenden, lediglich längs bewegbaren Einzelfräser dreht sich der Körper relativ zum Fräser.

Die Dicke der abzutragenden, vorzugsweise abgefrästen Materialschicht sollte hinreichend sein, um sicherzustellen, dass eine ausreichend dicke Oberflächenschicht abgetragen und die Schnittfläche aufgerissen oder ausgeraut wird.

Durch die erfindungsgemäße Oberflächenbearbeitung durch Abtragen einer Oberflächenschicht durch Abfräsen wird eine raue, quasi verkraterte bzw. aufgerissene Oberfläche erzeugt, die in mehrerlei Hinsicht vorteilhaft ist. Zum einen verbessert sich das Farbaufnahmevermögen in Folge der erzielten Oberflächenvergrößerung, das heißt, dass die Walze mehr Farbe aufnehmen kann. Daraus resultiert auch eine Verbesserung der Farbabgabe, denn durch die Erhöhung der Farbaufnahme vergrößert sich die maximal streichbare Fläche bei einmaliger Farbaufnahme. Schließlich verbessert sich als wesentlicher Vorteile auch das Streichresultat, nachdem Luftblasen durch die offene, raue Oberfläche weitestgehend vermieden werden. Insgesamt ergibt sich ein sehr homogenes, feines Streichbild.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung zur Erläuterung des Herausschneidens des zylindrischen Schaumstoffkörpers zur Bildung der Farbwalze,
- Fig. 2: eine Perspektivansicht des herausgeschnittenen zylindrischen Körpers,
- Fig. 3: eine vergrößerte Teilschnittansicht durch den Schaumstoffkörper aus Fig. 2,
- Fig. 4: eine Prinzipdarstellung zur Erläuterung des Abfräsvorgangs, und
- Fig. 5: eine Teilschnittansicht durch den die Schaumstoffwalze bildenden, oberflächlich nachbearbeitenden Schaumstoffkörper.

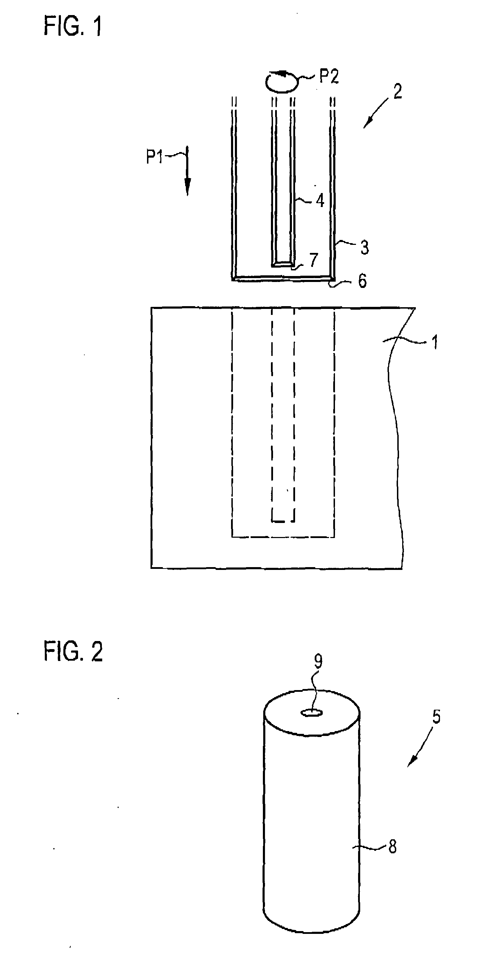

Fig. 1 zeigt einen großflächigen Schaumstoffblock 1, aus dem unter Verwendung eines Messers 2 mit einem zylindrischen äußeren Messerabschnitt 3 und einem zylindrischen inneren, konzentrisch dazu angeordneten Messerabschnitt 4 ein zylindrischer Schaumstoffkörper 5 herausgeschnitten wird. Der zylindrische Messerabschnitt 3 weist an seiner Stirnkante eine ringförmig umlaufende Schneide 6 auf, entsprechend weist auch der innere Messerabschnitt 4 eine an seiner Stirnseite befindliche umlaufende Schneide 7 auf. Über einen geeigneten Stellmechanismus wird das zylindrische Messer 2, wie durch den Pfeil P1 dargestellt ist, von oben auf den Schaumstoffblock 1 aufgesetzt und eine definierte Tiefe nach unten gefahren. Hierbei wird der Schaumstoffblock 1 infolge der schnellen Rotation des Messers (siehe den Pfeil P2) eingeschnitten wird. Der Einschnitt erfolgt nicht durch den gesamten Schaumstoffblock 1, sondern nur bis zu einer definierten Tiefe, der Schaumstoffkörper 5 wird erst später durch einen horizontal verlaufenden Schnitt herausgelöst.

Fig. 2 zeigt den zylindrischen Schaumstoffkörper 5. Dieser weist eine zylindrische Außenfläche 8 auf, auf die die aufzubringende Farbe aufgenommen wird und über die sie verteilt wird. Gezeigt ist ferner die zylindrische herausgeschnittene Aufnehmung 9, in die ein hier nicht näher gezeigtes zylindrisches Halteelement eingesetzt wird, das darin verklebt wird und das zur lösbaren Rastbefestigung mit einem hier nicht näher gezeigten Farbwalzenbügel dient.

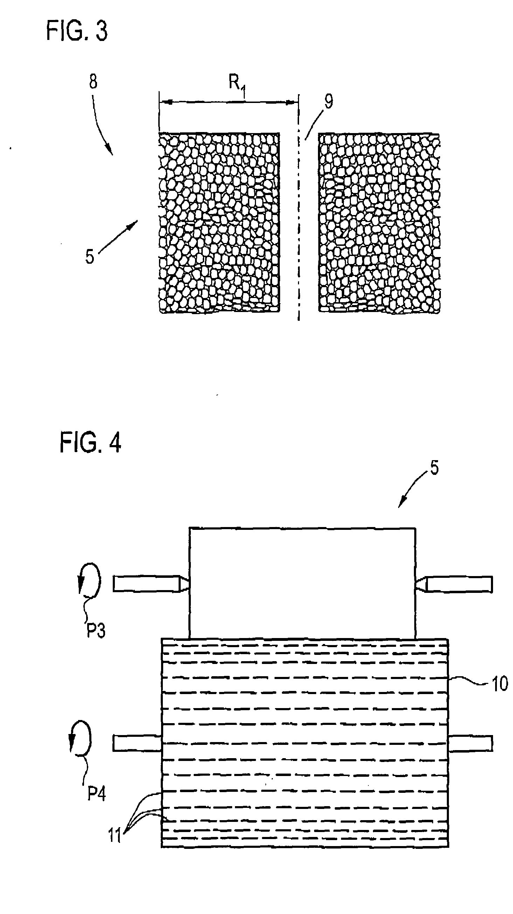

Fig. 3 zeigt in einer vergrößerten Prinzipdarstellung eine Schnittansicht durch einen Teil des Körpers 5 aus Fig. 2. Gezeigt ist die Außenfläche 8, wobei diese, wie in Fig. 3, die eine Prinzipdarstellung ist, vergrößert gezeigt ist, eine im Schnittbild weitgehend geschlossenzellige Oberflächenstruktur aufweist, das heißt, die Außenfläche 8 ist nicht offenporig, vielmehr sind sehr viele der außenliegenden Zellen des Schaumstoffmaterials geschlossen.

Demgegenüber ist nun erfindungsgemäß vorgesehen, den Schaumstoffkörper 5 an seiner Außenfläche 8 nachzubearbeiten und dort eine Oberflächenschicht abzutragen, um auf diese Weise eine homogene Außenfläche 8 mit einem sehr großen offenen Zellanteil zu bilden. Zu diesem Zweck ist, siehe die Prinzipdarstellung in Fig. 4, nach einer bevorzugten Erfindungsausgestaltung eine Fräswalze 10 vorgesehen, die an ihrer Oberfläche eine Vielzahl von verteilt und versetzt zueinander angeordneten Fräsvorsprünge 11 aufweist. Die Fräswalze 10 rotiert (siehe den Pfeil P3) mit hoher Geschwindigkeit relativ zu dem im gezeigten Beispiel ebenfalls rotierenden (siehe den Pfeil P4) Schaumstoffkörper 5, der ebenfalls entsprechend eingespannt ist und zur Rotation angetrieben wird, wobei in der Prinzipdarstellung gemäß Fig. 4 weder der Walzenantrieb noch der Schaumstoffkörperantrieb näher dargestellt ist. Die Rotationsgeschwindigkeit der Fräswalze 10 beträgt mehrere 1000 Umdrehungen/min, während der Schaumstoffkörper 5 demgegenüber etwas langsamer rotiert, er kann dabei in die gleiche Richtung rotieren (wie dargestellt) oder in die entgegengesetzte Richtung.

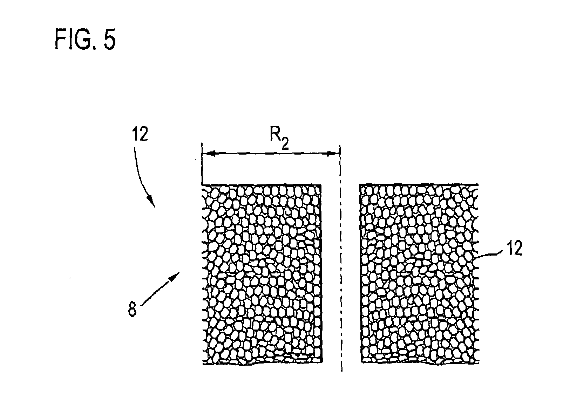

In jedem Fall erfolgt so ein oberflächlicher Fräsabtrag einer wenngleich sehr dünnen Oberflächenschicht, so dass sich, siehe Fig. 5, ein vollkommen zylindrischer Schaumstoffkörper 5 mit einer sehr homogenen Außenfläche 8 ergibt. Dieser nachbearbeitete Schaumstoffkörper 5 bildet die Schaumstoffwalze 12 einer herzustellenden Farbwalze, es ist lediglich noch das Halteelement einzusetzen. Der Radius nimmt dabei vom Radius R₁ beim nicht oberflächlich nachbehandelten Schaumstoffkörper (siehe Fig. 3) auf einen demgegenüber verringerten Radius R₂, wie in Fig. 5 dargestellt ist, ab. Die äußerst homogene, weil keinerlei Profilierung oder Struktur aufweisende Außenfläche 8 lässt ein vollkommen gleichmäßiges Aufbringen der Farbe oder des Lacks zu, so dass die eingangs genannten Probleme nicht mehr gegeben sind. Die Oberfläche der Walze ist rau und verkratert, wie in Fig. 5 gezeigt vollkommen glatt. An der Außenseite sind sehr viele offene Zellen vorhanden, die infolge der die Zellen quasi aufreisenden Nachbearbeitung geöffnet wurden. Verglichen mit der Walzenoberfläche nach dem Herausschneiden (vgl. Fig. 3) ergibt sich hier ein mehrfach größeres Volumen an offenen Zellen. Eine über die gesamte Walzenoberfläche homogene Rauigkeit, die zu einer vergrößerten Oberfläche und damit einem größeren Farbaufnahmevolumen führt, ist folglich gegeben. Aus dieser Rauigkeit resultiert schließlich auch das homogene, feine Streichbild. Über die Länge der Walze sind, wie beschrieben, keine Wellen- oder sonstige Profilierungen mehr gegeben.

In den derart nachbearbeiteten Schaumstoffkörper 5 wird sodann zur Bildung der Farbwalze der bereits beschriebene Haltekörper zur Befestigung des Bügels in die Ausnehmung 9 eingesetzt und verklebt.

## Patentansprüche

1. Farbwalze für einen Farbroller, umfassend eine Schaumstoffwalze mit zylindrischer Außenfläche, **dadurch gekennzeichnet, dass** die aus einem Schaumstoffblock (1) herausgeschnittene Schaumstoffwalze (12) an der Außenfläche (8) unter Materialabtrag zur Vergrößerung der Oberfläche derart durch Abfräsen nachbearbeitet ist, dass eine raue, aufgerissene zylindrische Walzenoberfläche mit geöffneten außenliegenden Schaumstoffzellen erzeugt ist.

2. Farbroller umfassend eine Farbwalze nach Anspruch 1.

3. Verfahren zur Herstellung einer Schaumstoffwalze für eine Farbwalze nach Anspruch 1, **dadurch gekennzeichnet, dass** ein die Schaumstoffwalze (12) bildender zylindrischer Körper (5) aus einem Schaumstoffblock (1) herausgeschnitten und anschließend an seiner Außenfläche (8) unter Materialabtrag zur Bildung einer rauen, aufgerissenen zylindrischen Oberfläche mit geöffneten außenliegenden Schaumstoffzellen durch Abfräsen nachbearbeitet wird.

4. Verfahren nach Anspruch 3, **dadurch gekennzeichnet, dass** zum Abfräsen eine rotierende Walze (10) verwendet wird, an deren Außenseite mehrere Fräsabschnitte (11) vorgesehen sind.

5. Verfahren nach Anspruch 4, **dadurch gekennzeichnet, dass** die Fräsabschnitte in Form einer Vielzahl einzelner versetzt zueinander vorgesehener Fräsvorsprünge (11) oder in Form mehrerer sich über die Länge der Walze erstreckender Fräsvorsprünge ausgebildet sind.

6. Verfahren nach Anspruch 3, **dadurch gekennzeichnet, dass** zum Abfräsen ein Einzelfräser verwendet wird, der längs des zylindrischen Körpers bewegt wird, wobei entweder der Einzelfräser oder der Körper oder beide rotieren.
